# DEMANDE DE BREVET EUROPEEN

(11) **EP 0 877 233 A1**
(43) Date de publication de la demande: **11.11.1998**
(21) Numéro de dépôt: 98401086.8
(22) Date de dépôt: 05.05.1998
(51) Int. Cl.: G01F 1/075, G01F 15/06

(54) **Compteur de liquides infraudable**

(30) Priorité: 06.05.1997 FR 9705556; 10.07.1997 FR 9708788
(71) Demandeur: Societe Anonyme de Production de Procédés de Comptage de l'Eau et Autres Liquides, SAPPEL, 68300 Saint Louis (FR)
(72) Inventeur: Munck, Christophe, 68300 Saint Louis (FR)
(74) Mandataire: Dawidowicz, Armand

(57) **Abrégé**

L'invention concerne un compteur de liquide comportant un boîtier (2) à deux compartiments (4, 5) comportant respectivement un organe moteur (6) placé dans l'axe de déplacement d'une veine (3) du liquide à mesurer et un totalisateur (7), la transmission du mouvement de l'organe moteur (6) au totalisateur (7) étant réalisée au travers de la paroi de séparation des compartiments (4, 5) à l'aide d'un dispositif d'entraînement magnétique comportant au moins un couple d'aimants (8, 9), le premier aimant (8) associé à l'organe moteur (6) étant en équilibre magnétique avec l'aimant (9) associé au totalisateur (7).

L'invention consiste en ce que chaque aimant (8, 9) présente au moins une double polarité sur chacune de ses autres faces.

Application aux compteurs de liquides.

## Description

La présente invention concerne un compteur de liquides infraudable.

Les compteurs de liquides et, plus particulièrement, les compteurs d'eau, comportent un organe moteur tel qu'une turbine, une hélice ou un piston qui, placé dans l'axe de déplacement de la veine liquide à mesurer, transmet son mouvement à un totalisateur qui, par démultiplication d'un train de pignons, actionne un indicateur, généralement composé de tambours numériques, encore appelé ogomètre.

Le totalisateur est mis en place, de manière habituelle, dans un compartiment étanche du boîtier du compteur, isolé du compartiment du boîtier renfermant l'organe moteur en contact avec le liquide à mesurer. Aussi, afin de permettre la transmission du mouvement de l'organe moteur au totalisateur au travers de la paroi de séparation, on utilise le plus souvent une transmission magnétique.

Ainsi, un premier aimant, appelé aimant entraîneur, lié à l'organe moteur entraîne en rotation, sous l'effet du mouvement de l'organe moteur, un second aimant, appelé aimant entraîné, placé sur le premier pignon du train de pignons du totalisateur. Ces aimants sont disposés l'un par rapport à l'autre de telle sorte que le pôle sud de l'un corresponde au pôle nord de l'autre et réciproquement afin qu'un équilibre magnétique naturel soit obtenu. De ce fait, lorsque l'aimant entraîneur est entraîné en rotation sous l'effet du mouvement de l'organe moteur, l'aimant entraîné accompagne ce mouvement de manière à préserver l'équilibre magnétique naturel, ce qui actionne le train de pignons du totalisateur.

D'autres formes d'accouplement magnétique sont également utilisées. Ainsi, on connaît par FR-A-2 280 060 un compteur présentant un accouplement magnétique constitué d'une paire d'aimants de polarités opposées positionnés diamétralement opposés sur un axe perpendiculaire à l'axe du rotor de la turbine et d'une paire d'aimants de polarités opposées positionnés également diamétralement opposés en liaison avec le compteur. Il s'établit entre les paires d'aimants un équilibre magnétique. Chaque aimant est constitué de deux aimants élémentaires de même polarité et chaque aimant présente donc une polarité unique sur toutes ses faces.

On connaît également par FR-A-2 343 231, un appareil de mesure volumétrique comportant un accouplement magnétique constitué en partie d'un disque monté sur un arbre de l'organe de mesure et sur le pourtour duquel sont disposés quatre aimants de sorte que des aimants de polarités différentes alternent les uns avec les autres, l'autre partie de l'accouplement magnétique étant réalisée de manière identique. Dans ce dispositif, il existe donc des aimants présentant une polarité unique sur toutes leurs faces.

Dans FR-A-2 263 496, on décrit un accouplement magnétique constitué de deux disques dont les faces en regard ont été aimantées d'un nombre pair de pôles. Ainsi, le disque présente des zones à polarité unique.

Il est possible d'utiliser également un troisième aimant similaire aux aimants précédents et permettant d'actionner un contact électrique lors du fonctionnement du compteur. Dans ce cas, l'aimant est monté sur un mobile du totalisateur dont la rotation correspond à une unité de volume du liquide de telle sorte que les passages successifs des pôles sud et nord de cet aimant ouvrent et ferment le contact électrique, en général un interrupteur à lames souples ("interrupteur Reed") conçu pour fonctionner sous l'effet d'un champ magnétique. On peut ainsi transmettre à distance des impulsions électriques au rythme de l'écoulement du liquide mesuré et, en particulier, commander ainsi un dispositif de comptage électronique ou de télétransmission.

Dans le brevet US-A-5 493 917, on décrit la mise en place d'un émetteur d'impulsions électriques par un aimant placé sur une aiguille de l'indicateur d'un compteur d'eau.

Cependant, les compteurs de liquide de ce type présentent un inconvénient majeur dans la mesure où la présence d'un aimant extérieur d'une puissance suffisante perturbe le fonctionnement dudit compteur.

En effet, dans le cas d'un entraînement magnétique avec un aimant entraîneur et un aimant entraîné, chaque aimant de l'entraînement magnétique présente respectivement quatre faces à double polarité et deux faces à polarité unique. De ce fait, si on approche un aimant extérieur, un équilibre magnétique s'établit alors préférentiellement entre les faces de polarité unique des aimants et l'aimant perturbateur ce qui bloque le compteur.

Dans le cas des autres formes d'entraînement magnétique proposées, les aimants qui sont tous d'une seule polarité vont établir un équilibre magnétique préférentiel avec un aimant extérieur ce qui bloque le compteur.

Afin de pallier cet inconvénient, la présente invention propose un compteur de liquide comportant un dispositif d'entraînement magnétique dont l'équilibre magnétique naturel ne peut pas être perturbé par un aimant extérieur.

A cet effet, l'invention a pour objet un compteur de liquide, en particulier un compteur d'eau, du type comportant un boîtier présentant deux compartiments séparés de manière étanche comportant respectivement un organe moteur placé dans l'axe de déplacement d'une veine du liquide à mesurer et un totalisateur qui, par démultiplication d'un train de pignons, actionne un indicateur composé de tambours numériques, la transmission du mouvement de l'organe moteur au totalisateur étant réalisée au travers de la paroi de séparation des compartiments à l'aide d'un dispositif d'entraînement magnétique comportant au moins un couple d'aimants présentant respectivement au moins une face à double polarité, le premier aimant associé à l'organe moteur, ou aimant entraîneur, étant en équilibre magnétique avec le second aimant associé au totalisateur, ou aimant entraîneur, caractérisé en ce que chaque aimant présente au moins une double polarité sur chacune de ses autres faces.

De préférence, les aimants présentent une forme parallélépipédique et sont constitués en ferrite ou en terres rares.

De préférence, les aimants sont constitués respectivement par deux aimants bipolaires élémentaires assemblés, le bloc ainsi obtenu pouvant présenter quatre faces contiguës présentant une double polarité et deux faces opposées l'une à l'autre présentant une quadruple polarité.

Les aimants peuvent également être réalisés à partir de quatre aimants élémentaires assemblés.

Les aimants peuvent également être réalisés d'une seule pièce.

Selon une première forme de réalisation du compteur selon l'invention, le dispositif d'entraînement magnétique comporte au moins un couple d'aimants, le premier aimant dit entraîneur associé à l'organe moteur et le second aimant dit entraîné associé au totalisateur étant positionnés pour obtenir un équilibre magnétique sous l'effet de leur attraction.

Ainsi, le dispositif d'entraînement magnétique comporte, par exemple, un couple d'aimants en équilibre magnétique le premier aimant associé à l'organe moteur étant monté sur l'axe de rotation de l'organe moteur de manière à présenter une de ses faces à double polarité en équilibre magnétique avec une face à double polarité du second aimant associé à l'axe d'un pignon du totalisateur, le pôle nord du premier aimant étant en face du pôle sud du second aimant. Les aimants sont, par conséquent, en équilibre magnétique sous l'effet de leur attraction et l'entraînement en rotation du premier aimant associé à l'organe moteur ou appelé encore aimant entraîneur entraîne la rotation du second aimant appelé aimant entraîné. Il peut être prévu plusieurs couples d'aimants en équilibre magnétique sous l'effet de leur attraction.

Selon une seconde forme de réalisation du compteur selon l'invention, le dispositif d'entraînement magnétique comporte au moins deux couples d'aimants. Comme précédemment décrit, chaque couple d'aimants présente un premier aimant dit entraîneur associé à l'organe moteur et un second aimant dit entraîné associé au totalisateur. Afin d'obtenir un équilibre magnétique, on positionne les premiers aimants de telle sorte qu'il s'instaure avec les seconds aimants une répulsion magnétique.

Ainsi, on positionne les aimants entraîneurs et les aimants entraînés de sorte que chaque aimant entraîné est entre deux aimants entraîneurs, les aimants entraîneurs et les aimants entraînés présentant des faces sensiblement dans un même plan et les pôles identiques sur un aimant entraîneur et un aimant entraîné étant voisins dans ce plan.

Ainsi, les aimants sont positionnés de sorte que chaque aimant entraîneur est entre deux aimants entraînés, une face à double polarité d'un aimant entraîneur se trouvant alors sensiblement dans un même plan que, et entre respectivement une face à double polarité d'un premier aimant entraîné et une face à double polarité d'un second aimant entraîné. Ainsi, les faces à double polarité sont positionnées dans un même plan de sorte qu'un pôle de la face à double polarité d'un aimant entraîneur est à proximité du pôle identique de la face de double polarité du premier aimant entraîné et l'autre pôle de l'aimant entraîneur étant à proximité du pôle identique sur la face à double polarité du second aimant entraîné.

Il en est de même si ce sont les faces à quadruple polarité des aimants qui sont placées dans un même plan.

Ce dispositif d'entraînement permet d'éviter la création d'une pression axiale sur les axes portant les aimants. De cette manière, on réduit considérablement les phénomènes d'usure et les frottements qui nuisent généralement à la sensibilité des compteurs à transmission magnétique.

Les aimants d'un compteur selon l'invention présentant sur chaque face au moins une double polarité, lorsqu'un aimant perturbateur est amené au voisinage du compteur selon l'invention, celui-ci reste sans effet sur les aimants du dispositif d'entraînement magnétique du compteur et ce quelle que soit la position dudit aimant perturbateur par rapport au compteur.

En effet, quelle que soit la polarité de l'aimant perturbateur et sa position, ce dernier se trouve toujours en vis-à-vis d'une face d'un aimant du compteur présentant à la fois au moins deux pôles contraires. De ce fait, la force d'attraction qui est exercée entre le pôle de l'aimant perturbateur et le pôle contraire de la face d'un aimant du compteur est neutralisée par la force de répulsion entre le pôle de l'aimant perturbateur et le même pôle sur la face de l'aimant du compteur.

En résultat, un aimant perturbateur reste sans effet sur les aimants du compteur, rendant ainsi toute fraude par blocage de l'entraînement magnétique du compteur impossible.

Dans un compteur selon la présente invention, on peut prévoir qu'un troisième aimant soit mis en place de manière à actionner un contact électrique lors du fonctionnement du compteur. De préférence, cet aimant présente également au moins une double polarité sur chacune de ses faces.

Ainsi, de manière avantageuse, le fonctionnement de cet aimant ne peut pas être bloqué par un aimant extérieur.

On décrira maintenant plus en détail des exemples de réalisation d'un compteur de liquide selon l'invention en référence au dessin annexé dans lequel :
la figure 1 représente une vue schématique en perspective d'un compteur de liquide de l'état de la technique dont les parois sont supposées transparentes ;
la figure 2 représente une vue en perspective d'un aimant utilisé dans un compteur selon la première forme de réalisation de l'invention ;
la figure 3 représente une vue en perspective d'un dispositif d'entraînement magnétique selon la première forme de réalisation d'un compteur selon l'invention ;
la figure 4 représente une vue partielle en perspective d'un aimant d'actionnement d'un contact électrique du compteur de la figure 1, le boîtier du compteur ayant été partiellement arraché ;
la figure 5 représente une vue en perspective d'un dispositif d'entraînement selon une variante de la seconde forme de réalisation d'un compteur selon l'invention ;
la figure 6 représente une vue de côté d'un dispositif d'entraînement selon la figure 5 ;
la figure 7 représente schématiquement la disposition des polarités voisines des aimants du dispositif selon une variante de la figure 5 au niveau d'un plan P ;

Les figures 8 et 9 représentent schématiquement la disposition des polarités, au niveau d'un plan P, des aimants des variantes du dispositif d'entraînement magnétique selon la seconde forme de réalisation de l'invention.

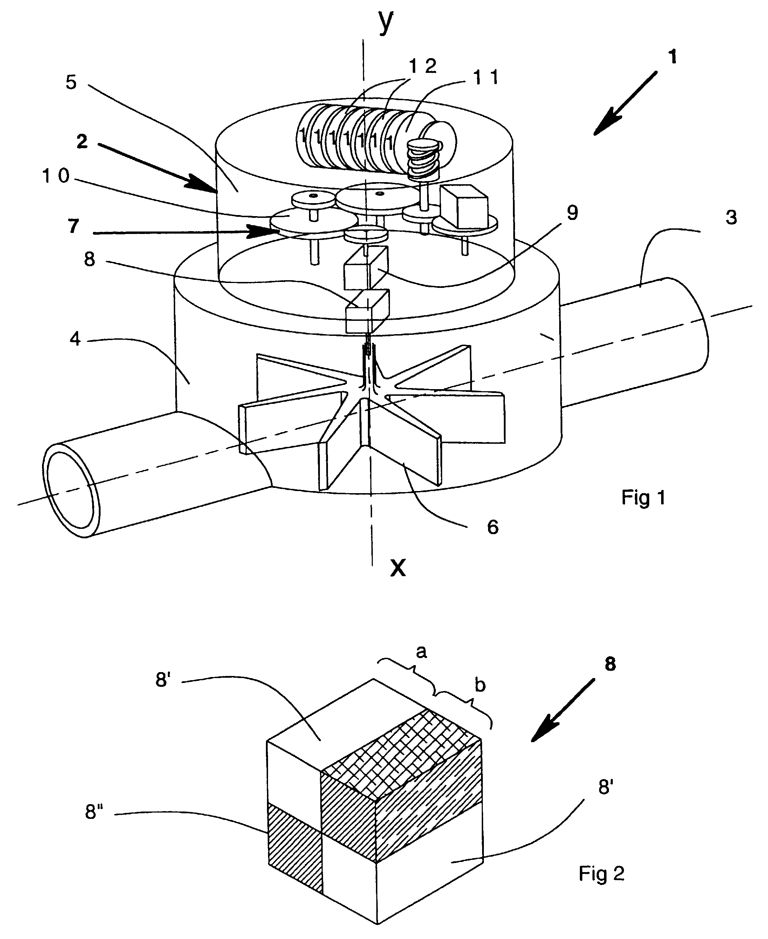

Pour des raisons de clarté, seuls les contours du boîtier 2 d'un compteur 1 de l'état de la technique auquel peut s'appliquer l'invention et de la veine 3 de liquide à mesurer sont représentés à la figure 1.

Un compteur 1 comporte un boîtier 2 présentant deux compartiments 4 et 5 renfermant respectivement un organe moteur tel qu'une turbine 6 et un totalisateur 7. La turbine 6 est placée dans l'axe de déplacement du liquide de la veine 3 de telle sorte que la turbine 6 est entraînée en rotation par le liquide.

Afin de transmettre le mouvement de la turbine 6 au totalisateur 7 au travers de la paroi étanche séparant le compartiment 4 du compartiment 5, on utilise un dispositif d'entraînement magnétique selon un premier mode de réalisation.

Ainsi, un aimant 8 est monté sur l'axe de rotation X de la turbine, organe moteur, 6 de manière à présenter une face à double polarité en vis-à-vis d'une face à double polarité d'un aimant 9 monté sur le totalisateur 7 de telle sorte que l'équilibre magnétique naturel est obtenu, le pôle nord du premier aimant 8 étant face au pôle sud du second aimant 9 et réciproquement. Les aimants 8 et 9 sont en situation d'attraction.

De ce fait, lors d'un écoulement de liquide, la turbine 6 est entraînée en rotation et entraîne alors en rotation l'aimant 8 qui devient l'aimant entraîneur. Afin de maintenir l'équilibre magnétique, l'aimant 9 est entraîné également en rotation et actionne un train de pignons 10 du totalisateur 7 dont la démultiplication actionne un indicateur 11 composé généralement de tambours numériques 12.

Chaque aimant 8, 9 présente donc au moins une face de double polarité et afin d'éviter les fraudes toutes les autres faces desdits aimants 8, 9 présentent également au moins une double polarité comme on peut le voir à la figure 2.

Ainsi, de préférence, chaque aimant 8, 9 est constitué de deux aimants élémentaires à double polarité a, b, chaque aimant a, b présentant quatre faces à double polarité et deux faces à polarité unique. On assemble les aimants a et b, une face à double polarité de a et une face à double polarité de b étant accolées l'une à l'autre, le pôle nord (représenté hachuré) de la face de l'aimant a reposant contre le pôle sud de la face de l'aimant b et réciproquement.

Chaque aimant a, b peut être obtenu à partir de deux aimants élémentaires de polarité opposée.

De ce fait, on obtient, par exemple, un aimant 8 présentant quatre faces à double polarité 8' et deux faces à quadruple polarité 8" comme on peut le voir à la figure 2.

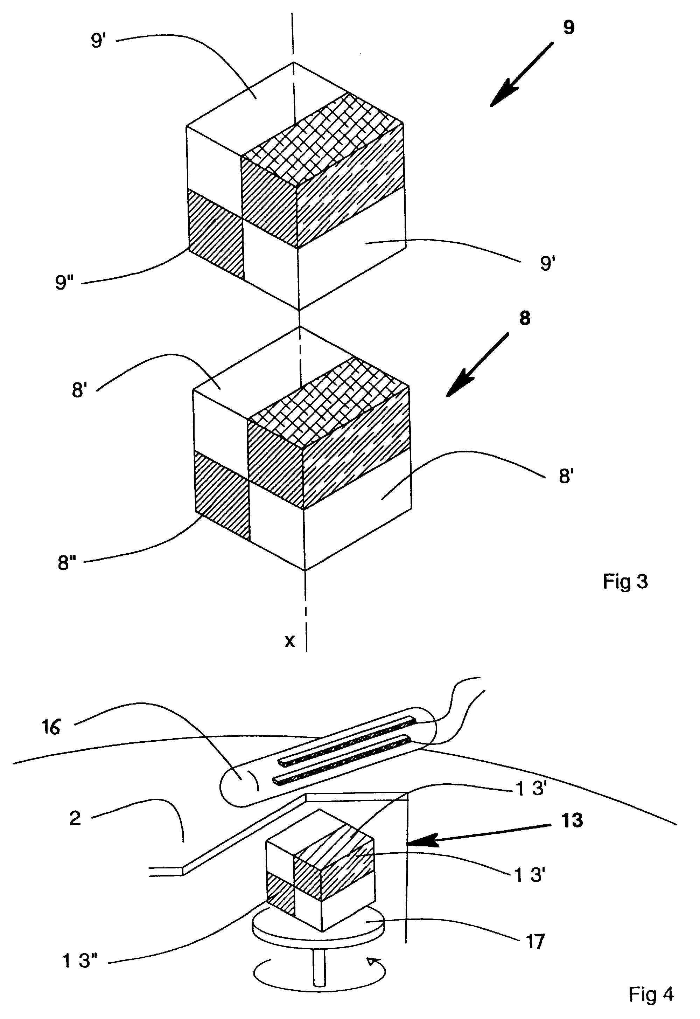

De cette manière, le compteur 1 selon l'invention présente deux aimants 8 et 9 disposés en vis-à-vis l'un de l'autre comme on peut le voir à la figure 3, une face à double polarité 8' de l'aimant 8 faisant face à une face à double polarité 9' de l'aimant 9 de telle sorte que l'équilibre magnétique est obtenu.

Les autres faces des aimants 8 et 9 étant soit à double polarité 8', 9' soit à quadruple polarité 8", 9", le dispositif d'entraînement magnétique ne peut pas être perturbé par la mise en place d'un aimant à l'extérieur du boîtier en vue d'une fraude.

Le compteur 1 de la figure 1 comporte également un aimant 13 permettant d'actionner un contact électrique tel qu'un interrupteur à lames souples 16 (voir figure 4) au cours du fonctionnement du compteur 1. Cet aimant 13 est monté sur un mobile 17 du totalisateur 7 dans le compartiment 5 du boîtier 2, l'une de ses faces à double polarité 13' étant en vis-à-vis de l'interrupteur à lames souples 16.

Au cours du fonctionnement du compteur 1, cet aimant 13 est entraîné en rotation et le passage successif des pôles nord (hachuré) et sud dudit aimant 13 a pour effet d'ouvrir et de fermer l'interrupteur à lames souples 16 conçu pour fonctionner sous l'effet d'un champ magnétique.

La rotation de l'aimant 13 est choisie en accord avec une unité de volume de liquide, par exemple un tour par litre ou par mètre cube. On peut ainsi transmettre des impulsions électriques au rythme de l'écoulement du liquide mesuré de manière à actionner, par exemple, un dispositif électronique de comptage.

De manière à éviter une fraude quelconque au niveau de l'aimant 13, toutes les faces de celui-ci présentent au moins une double polarité, l'aimant 13 étant d'une structure identique à la structure des aimants 8 et 9 et présentant des faces à double polarité 13' et des faces à quadruple polarité 13".

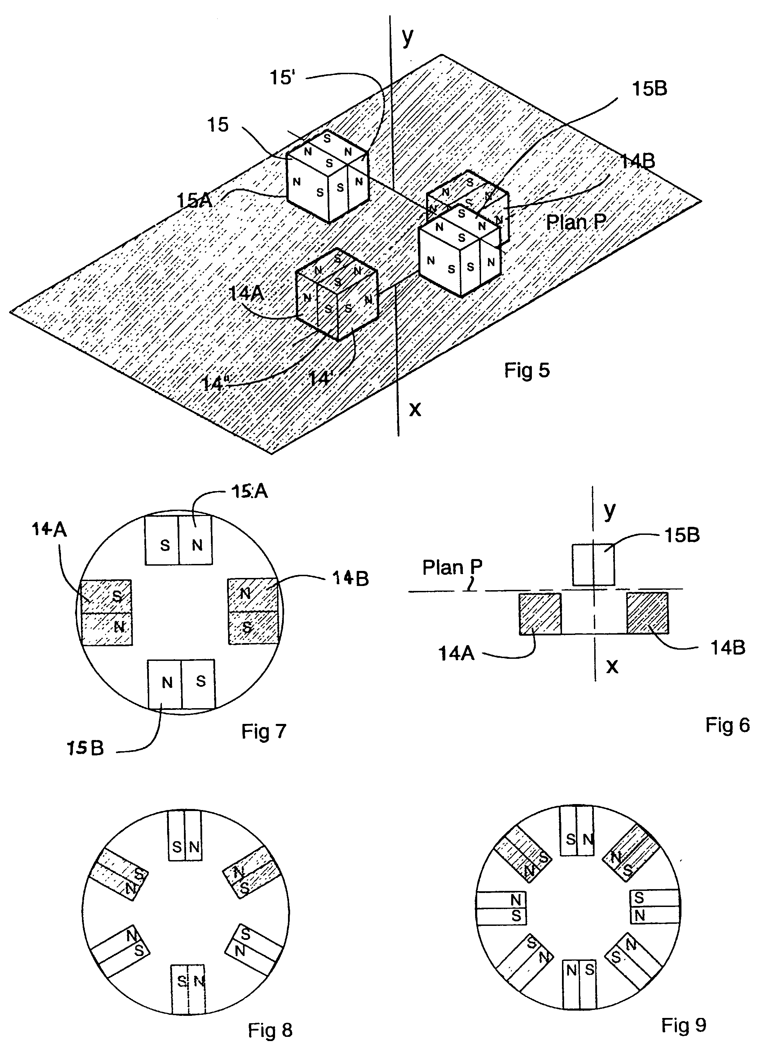

A la figure 5 est représenté un dispositif d'entraînement réalisé selon un second mode de réalisation de l'invention. Deux couples d'aimants sont utilisés. Chaque couple comporte un premier aimant 14 lié à l'organe moteur 6 et un second aimant 15 associé au totalisateur 7, en conséquence, le dispositif d'entraînement comporte deux aimants 14a et 14b dits entraîneurs et deux aimants 15a et 15b dits entraînés, les premiers étant montés symétriques sur l'axe de rotation X de la turbine 6 et les seconds étant montés symétriques sur un axe Y du totalisateur 7.

Les aimants 14a et 14b sont positionnés sensiblement entre les aimants 15a et 15b comme cela est visible aux figures 5 et 6 et de telle sorte que les faces inférieures des aimants 15a et 15b et les faces supérieures des aimants 14a et 14b sont situées sensiblement dans un même plan P. Afin d'obtenir un équilibre magnétique, on positionne les premiers aimants 14a et 14b de telle sorte qu'il s'instaure avec les seconds aimants 15a et 15b une répulsion magnétique au niveau de ce plan P, c'est-à-dire que les pôles identiques d'un premier aimant 14a ou 14b et d'un second aimant 15a ou 15b sont à proximité l'un de l'autre de manière à se repousser.

Les aimants 14a et 14b sont positionnés de manière à présenter une face à double polarité (variante représentée à la figure 7) ou à quadruple polarité (variante représentée à la figure 5) au voisinage d'une face à double ou quadruple polarité des aimants 15a et 15b de telle sorte qu'un pôle de l'aimant 14a est à proximité d'un pôle identique de l'aimant 15a et que le second pôle de l'aimant 14a est à proximité du pôle identique sur l'aimant 15b. Il en est de même pour l'aimant 14b.

Par conséquent, les pôles identiques sur l'aimant 14a et sur l'aimant 15a à proximité l'un de l'autre se repoussent de même que les pôles identiques sur l'aimant 14a et l'aimant 15b. Il s'établit donc un équilibre magnétique dû à la répulsion qui s'exerce entre les aimants 14a, 14b et 15a, 15b ainsi qu'on peut le voir à la figure 7 qui montre bien les polarités voisines sensiblement dans le même plan P, causes du phénomène de répulsion.

On crée ainsi un équilibre magnétique stable et lorsque les aimants 14a et 14b sont entraînés en rotation par l'axe X de la turbine 6, on entraîne également les aimants 15a et 15b du totalisateur 7 de manière à conserver cet équilibre magnétique.

Les aimants 14 et 15 ayant toutes leurs faces présentant au moins une double polarité, sont réalisés du même type que les aimants 8 et 9, c'est-à-dire qu'il présente, par exemple, quatre faces 14', 15' à double polarité et deux faces opposées 14", 15" à quadruple polarité, de telle sorte qu'un aimant extérieur est inactif.

Les figures 8 et 9 représentent respectivement des dispositifs d'entraînement à trois et quatre couples d'aimants dans lesquels l'équilibre magnétique entre les aimants entraîneurs et entraînés est obtenu par le même phénomène de répulsion magnétique.

## Revendications

1. Compteur de liquide, en particulier un compteur d'eau, du type comportant un boîtier (2) présentant deux compartiments (4, 5) séparés de manière étanche comportant respectivement un organe moteur (6) placé dans l'axe de déplacement d'une veine (3) du liquide à mesurer et un totalisateur (7) qui, par démultiplication d'un train de pignons (10), actionne un indicateur (11) composé de tambours numériques (12), la transmission du mouvement de l'organe moteur (6) au totalisateur (7) étant réalisée au travers de la paroi de séparation des compartiments (4, 5) à l'aide d'un dispositif d'entraînement magnétique comportant au moins un couple d'aimants (8, 9 ; 14a, 15a ; 14b, 15b) présentant respectivement au moins une face à double polarité, le premier aimant (8, 14a, 14b) associé à l'organe moteur (6), ou aimant entraîneur, étant en équilibre magnétique avec le second aimant (9, 15a, 15b) associé au totalisateur (7), ou aimant entraîné,
caractérisé en ce que chaque aimant (8, 9, 14a, 14b, 15a, 15b) présente au moins une double polarité sur chacune de ses autres faces (8', 8" ; 9', 9").

2. Compteur selon la revendication 1,
caractérisé en ce que les aimants (8 ; 9; 14a, 14b ; 15a ; 15b) présentent une forme parallélépipédique et sont constitués en ferrite ou en terres rares.

3. Compteur selon l'une des revendications 1 et 2,
caractérisé en ce que les aimants (8 ; 9 ; 14a ; 14b ; 15a ; 15b) sont constitués respectivement par deux aimants bipolaires élémentaires (a, b) assemblés, l'aimant (8 ; 9 ; 14a; 14b ; 15a ; 15b) ainsi obtenu pouvant présenter quatre faces contiguës (8' ; 9'; 14' ; 15') présentant une double polarité et deux faces (8" ; 9" ; 14" ; 15") opposées l'une à l'autre présentant une quadruple polarité.

4. Compteur selon la revendication 3,
caractérisé en ce que chaque aimant bipolaire est constitué de deux aimants élémentaires de polarités opposées assemblés.

5. Compteur selon l'une des revendications 1 à 4,
caractérisé en ce qu'il comporte un aimant (13) permettant d'actionner un contact électrique tel qu'un interrupteur à lames souples (16) au cours du fonctionnement du compteur (1), toutes les faces dudit aimant (13) présentant au moins une double polarité.

6. Compteur selon la revendication 5,
caractérisé en ce que l'aimant (13) est monté sur un mobile (17) du totalisateur (7) dans le compartiment (5) du boîtier (2), l'une de ses faces à double polarité (13') étant en vis-à-vis de l'interrupteur à lames souples (16).

7. Compteur selon l'une des revendications 1 à 6,
caractérisé en ce que le dispositif d'entraînement magnétique comporte un couple d'aimant (8 ; 9), le premier aimant (8) associé à l'organe moteur (6), ou aimant entraîneur, étant monté sur l'axe de rotation de l'organe moteur (6) de manière à présenter une face à double polarité en équilibre magnétique avec une face à double polarité du second aimant (9) associé à l'axe d'un pignon du totalisateur (7), ou aimant entraîné.

8. Compteur selon l'une des revendications 1 à 6,
caractérisé en ce que le dispositif d'entraînement magnétique comporte au moins deux couples d'aimants (14a, 15a ; 14b, 15b), le premier aimant ou aimant entraîneur (14a, 14b) de chaque couple étant associé à l'organe moteur (6) et le second aimant ou aimant entraîné (15a, 15b) de chaque couple étant associé au totalisateur (7), les premiers aimants étant positionnés de telle sorte qu'il s'instaure avec les seconds aimants une répulsion magnétique.

9. Compteur selon la revendication 8,
caractérisé en ce que les aimants entraîneurs et les aimants entraînés sont positionnés de sorte que chaque aimant entraîné est entre deux aimants entraîneurs, les aimants entraîneurs et les aimants entraînés présentant des faces sensiblement dans un même plan et les pôles identiques sur un aimant entraîneur et un aimant entraîné étant voisins dans ce plan.

10. Compteur selon l'une des revendications 8 et 9,
caractérisé en ce que chaque aimant entraîneur (14a, 14b) est entre deux aimants entraînés (15a, 15b), une face à double polarité d'un aimant entraîneur (14a, 14b) se trouvant alors sensiblement dans un même plan que, et entre une face à double polarité d'un premier aimant entraîné et une face à double polarité d'un second aimant entraîné, les faces à double polarité étant positionnées de sorte qu'un pôle de la face à double polarité d'un aimant entraîneur (14a, 14b) est à proximité du pôle identique de la face à double polarité du premier aimant entraîné (15a) et l'autre pôle de la face à double polarité de l'aimant entraîneur (14a, 14b) étant à proximité du pôle identique sur la face à double polarité du second aimant entraîné (15b).

11. Compteur selon l'une des revendications 8 et 9,
caractérisé en ce que chaque aimant entraîneur (14a, 14b) est entre deux aimants entraînés (15a, 15b), une face à quadruple polarité d'un aimant entraîneur (14a, 14b) se trouvant alors sensiblement dans un même plan que, et entre une face à quadruple polarité d'un premier aimant entraîné et une face à quadruple polarité d'un second aimant entraîné, les faces à quadruple polarité étant positionnées de sorte qu'un pôle de la face à quadruple polarité d'un aimant entraîneur (14a, 14b) est à proximité du pôle identique de la face à quadruple polarité du premier aimant entraîné (15a) et l'autre pôle de la face à quadruple polarité de l'aimant entraîneur (14a, 14b) étant à proximité du pôle identique sur la face à quadruple polarité du second aimant entraîné (15b).
